# EUROPEAN PATENT APPLICATION

(11) **EP 3 418 075 A1**
(43) Date of publication of application: **26.12.2018**
(21) Application number: 17752914.6
(22) Date of filing: 25.01.2017
(51) Int. Cl.: B60C 11/12

(54) **PNEUMATIC TIRE**

(30) Priority: 15.02.2016 JP 2016025721
(71) Applicant: The Yokohama Rubber Co., Ltd., Minato-ku Tokyo 105-8685 (JP)
(72) Inventor: MORITO, Takumi, Hiratsuka-shi Kanagawa 254-8601 (JP); KURAMOCHI, Izumi, Tokyo 105-8685 (JP); KUWAHARA, Noboru, Hiratsuka-shi Kanagawa 254-8601 (JP)
(74) Representative: Dilg, Haeusler, Schindelmann Patentanwaltsgesellschaft mbH
(86) International application number: PCT/JP2017/002591
(87) International publication number: WO 2017/141651

(57) **Abstract**

A pneumatic tire includes a sipe that is formed in a tread rubber and includes an opening extending in a first direction in a surface of the tread rubber. The opening is provided between a first edge of the tread rubber extending in the first direction and a second edge of the tread rubber adjacent to the first edge in a second direction orthogonal to the first direction. The first edge and the second edge are divided into a first range defined in the first direction and a second range different from the first range. In the first range, the first edge is provided with a first chamfered portion. In the second range, the second edge is provided with a second chamfered portion. In the first range, the second edge is not provided with a chamfered portion. In the second range, the first edge is not provided with a chamfered portion.

## Description

### Technical Field

The present invention relates to a pneumatic tire.

### Background Art

In the technical field related to pneumatic tires, a pneumatic tire as disclosed in Patent Document 1 has been known that includes a sipe provided with a chamfered portion.

### Citation List

### Patent Literature

Patent Document 1: JP 2013-537134 T

### Summary of Invention

### Technical Problem

Dry performance and wet performance of a pneumatic tire are expected to improve depending on formation conditions of a chamfered portion in a sipe.

An aspect of the present invention is to provide a pneumatic tire that can provide good dry performance and wet performance in a compatible manner.

### Solution to Problem

According to an aspect of the present invention, a pneumatic tire as follows is provided. The pneumatic tire includes a sipe that is formed in a tread rubber and has an opening extending in a first direction in a surface of the tread rubber. The opening is provided between a first edge of the tread rubber extending in the first direction and a second edge of the tread rubber adjacent to the first edge in a second direction orthogonal to the first direction. The first edge and the second edge are divided into a first range defined in the first direction and a second range different from the first range. In the first range, the first edge is provided with a first chamfered portion. In the second range, the second edge is provided with a second chamfered portion. In the first range, the second edge is not provided with a chamfered portion. In the second range, the first edge is not provided with a chamfered portion.

According to an aspect of the present invention, in the first range, the first edge is provided with a first chamfered portion. In the second range, the second edge is provided with a second chamfered portion. In the first range, the second edge is not provided with a chamfered portion. In the second range, the first edge is not provided with a chamfered portion. In driving of a pneumatic tire, high traveling stability is obtained on both of dry road surfaces and wet road surfaces by the edge effect of the first edge and the second edge. Additionally, when the sipe is grounded, the opening of the sipe is closed. When the opening is closed, the first edge provided with the first chamfered portion and the second edge without a chamfered portion support each other in the first range, and the second edge provided with the second chamfered portion and the first edge without a chamfered portion support each other in the second range. The edge provided with a chamfered portion and the edge without a chamfered portion support each other, so that rigidity of the tread rubber when being grounded is maintained. For example, rigidity of the tread rubber is increased further in a structure in which an edge provided with a chamfered portion and an edge without a chamfered portion support each other than in a structure in which edges each provided with a chamfered portion support each other. Thus, traveling stability is improved. Additionally, when being grounded, a space is created between the first chamfered portion and a road surface, and a space is created between the second chamfered portion and the road surface. The created spaces ensure drainage properties during driving on wet road surfaces. Therefore, high traveling stability is obtained on wet road surfaces. In this way, according to an aspect of the present invention, the first range in which the first edge is provided with the first chamfered portion and the second edge is not provided with a chamfered portion and the second range in which the second edge is provided with the second chamfered portion and the first edge is not provided with a chamfered portion are defined. Thus, good dry performance and wet performance can be provided in a compatible manner.

In the aspect of the present invention, the first range preferably includes a first end portion of the opening in the first direction, and the second range preferably includes a second end portion of the opening in the first direction.

In this way, at the time of driving on a wet road surface, water collected in the space between the first chamfered portion and the road surface is smoothly discharged from the first end portion of the opening, and water collected in the space between the second chamfered portion and the road surface is smoothly discharged from the second end portion of the opening. Therefore, high traveling stability is obtained on wet road surfaces, and wet performance is improved.

In the aspect of the present invention, the first range is preferably defined between the first end portion and a central portion of the opening in the first direction, and the second range is preferably defined between the second end portion and the central portion of the opening in the first direction.

In this way, rigidity of the tread rubber is equalized in the first direction, and excellent traveling stability can be obtained. Additionally, the size of the space between the first chamfered portion and the road surface is substantially equal to the size of the space between the second chamfered portion and the road surface. Thus, discharge performance of water collected in the space between the first chamfered portion and the road surface and discharge performance of water collected in the space between the second chamfered portion and the road surface are made uniform. Therefore, high traveling stability is obtained on wet road surfaces, and wet performance is improved.

In the aspect of the present invention, the first edge and the second edge are preferably further divided into a third range different from the first range and the second range, and both of the first edge and the second edge are not preferably provided with a chamfered portion in the third range.

In this way, high traveling stability is obtained on both of dry road surfaces and wet road surfaces by the edge effect of the first edge and the second edge in the third range without a chamfered portion. Additionally, when the sipe is grounded and the opening of the sipe is closed, the first edge without a chamfered portion and the second edge without a chamfered portion support each other in the third range. Thus, rigidity of the tread rubber when being grounded is maintained.

In the aspect of the present invention, the first range preferably includes a first end portion of the opening in the first direction, the second range preferably includes a second end portion of the opening in the first direction, and the third range is preferably defined between the first range and the second range.

In this way, at the time of driving on a wet road surface, while rigidity of the tread rubber is maintained by the third range defined between the first range and the second range, water collected in the space between the first chamfered portion and the road surface is smoothly discharged from the first end portion of the opening, and water collected in the space between the second chamfered portion and the road surface is smoothly discharged from the second end portion of the opening.

In the aspect of the present invention, a dimension of the third range in the first direction is preferably less than or equal to 30% of a dimension of the opening in the first direction.

In this way, wet performance is maintained. With the dimension of the third range being great, greater than 30% of the dimension of the opening, when being grounded, the space between the first chamfered portion and the road surface and the space between the second chamfered portion and the road surface are not sufficiently secured, and drainage properties during driving on wet road surfaces may decrease. The dimension of the third range is less than or equal to 30% of the dimension of the opening, so that a decrease in wet performance can be suppressed while ensuring rigidity of the tread rubber.

In the aspect of the present invention, a plurality of the first ranges and the second ranges are preferably defined at intervals in the first direction.

In this way, rigidity of the tread rubber can be equalized in both of the first direction and the second direction, and excellent traveling stability can be obtained. Additionally, a plurality of spaces between the first chamfered portion and a road surface and between the second chamfered portion and the road surface are provided, so that high traveling stability is obtained on wet road surfaces, and wet performance is improved.

### Advantageous Effects of Invention

According to the aspect of the present invention, a pneumatic tire is provided that can provide good dry performance and wet performance in a compatible manner.

### Brief Description of Drawings

- FIG. 1: is a plan view schematically illustrating an outline of a sipe according to the present invention.
- FIG. 2: is a plan view schematically illustrating an outline of the sipe according to the present invention.
- FIG. 3: is a plan view schematically illustrating an outline of the sipe according to the present invention.
- FIG. 4: is a plan view schematically illustrating an outline of the sipe according to the present invention.
- FIG. 5: is a plan view schematically illustrating an outline of the sipe according to the present invention.
- FIG. 6: is a plan view schematically illustrating an outline of the sipe according to the present invention.
- FIG. 7: is a plan view schematically illustrating an outline of the sipe according to the present invention.
- FIG. 8: is a cross-sectional view schematically illustrating an outline of the sipe according to the present invention.
- FIG. 9: is a cross-sectional view schematically illustrating an outline of the sipe according to the present invention.
- FIG. 10: is a meridian cross-sectional view schematically illustrating a part of a pneumatic tire according to the present embodiment.
- FIG. 11: is a diagram illustrating one example of a tread portion of the pneumatic tire according to the present embodiment.
- FIG. 12: is a plan view illustrating one example of a sipe according to the present embodiment.
- FIG. 13: is a perspective view illustrating one example of the sipe according to the present embodiment.
- FIG. 14: is a plan view illustrating one example of the sipe according to the present embodiment.
- FIG. 15: is a perspective view illustrating one example of the sipe according to the present embodiment.
- FIG. 16: is a plan view illustrating one example of the sipe according to the present embodiment.
- FIG. 17: is a perspective view illustrating one example of the sipe according to the present embodiment.

### Description of Embodiments

### Summary of Invention

An outline of a pneumatic tire 1 according to the present invention will be described. In the following description, the pneumatic tire 1 is also referred to as a tire 1 when appropriate. The tire 1 according to the present invention includes a tread rubber 8 in which a sipe 100 is formed.

The sipe 100 is a narrow groove including an opening 103 formed in a surface of the tread rubber 8. When the sipe 100 is in a grounded state, the opening 103 of the sipe 100 is closed by elastic deformation of the tread rubber 8. When the sipe 100 is in a non-grounded state, the opening 103 of the sipe 100 is opened by the elastic deformation of the tread rubber 8. The sipe 100 generally has a groove width of less than or equal to 1.5 mm. The opening 103 of the sipe 100 may extend in a tire lateral direction or a tire circumferential direction.

The sipe 100 according to the present invention is a so-called chamfered sipe, and an edge that defines the opening 103 of the sipe 100 is provided with a chamfered portion. The inventor has found that good dry performance and wet performance of the tire 1 can be provided in a compatible manner by appropriately setting formation conditions of the chamfered portion in the sipe 100. Note that, in the present specification, the dry performance represents the capability of traveling stability like gripping force in at least one of driving, braking, and turning on dry road surfaces. The wet performance represents the capability of traveling stability like gripping force in at least one of driving, braking, and turning on wet road surfaces.

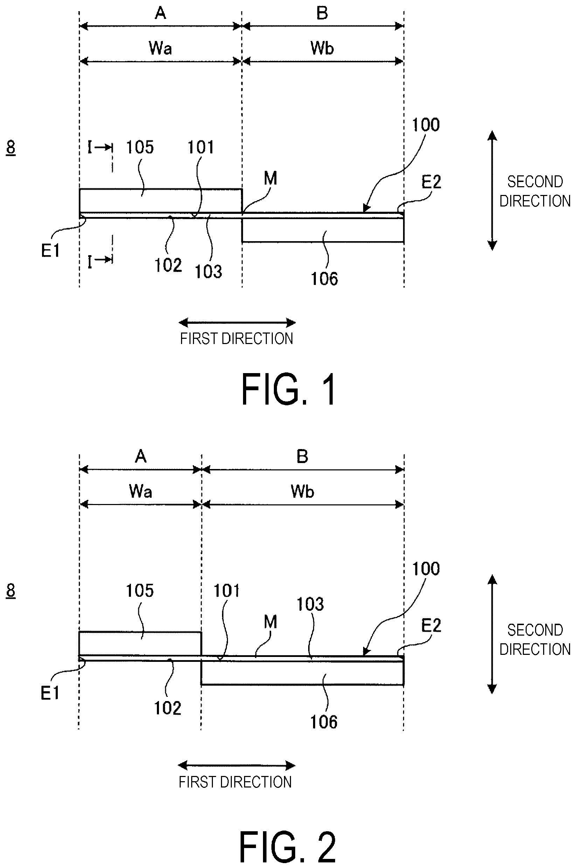

Hereinafter, an outline of the sipe 100 according to the present invention will be described with reference to FIGS. 1 to 7. FIGS. 1 to 7 are plan views each schematically illustrating an outline of the sipe 100 according to the present invention and each illustrate a part of the surface of the tread rubber 8 provided with the sipe 100. Note that, the surface of the tread rubber 8 is a surface in contact with a road surface in driving of the tire 1, and is also referred to as a tread surface, a contact patch, or a road contact surface.

An example illustrated in FIG. 1 will be described. In FIG. 1, the sipe 100 includes the opening 103 extending in a first direction in the surface of the tread rubber 8. The first direction and a second direction orthogonal to the first direction are defined in the surface of the tread rubber 8. The opening 103 is provided between a first edge 101 of the tread rubber 8 extending in the first direction and a second edge 102 of the tread rubber 8 adjacent to the first edge 101 in the second direction.

The first edge 101 and the second edge 102 are divided into a first range A and a second range B. The first range A and the second range B are defined to be side by side in the first direction. The first range A and the second range B are different ranges. The first range A and the second range B do not overlap each other.

The first range A has a certain width in the first direction and is a band region extending in the second direction. The second range B has a certain width in the first direction and is a band region extending in the second direction. A part of the first edge 101 is disposed in the first range A, and another part of the first edge 101 is disposed in the second range B. A part of the second edge 102 is disposed in the first range A, and another part of the second edge 102 is disposed in the second range B. The part of the first edge 101 faces the part of the second edge 102 in the first range A. The other part of the first edge 101 faces the other part of the second edge 102 in the second range B.

The first edge 101 in the first range A is provided with a first chamfered portion 105. The second edge 102 in the second range B is provided with a second chamfered portion 106. The second edge 102 in the first range A is not provided with a chamfered portion. The first edge 101 in the second range B is not provided with a chamfered portion.

In the present specification, the first range A is defined as a range in which the first chamfered portion 105 is provided in the entire region of the first edge 101 disposed in the first range A and a chamfered portion is not provided in the entire region of the second edge 102 disposed in the first range A. The second range B is defined as a range in which the second chamfered portion 106 is provided in the entire region of the second edge 102 disposed in the second range B and a chamfered portion is not provided in the entire region of the first edge 101 disposed in the second range B.

In other words, as illustrated in FIG. 1, the first chamfered portion 105 and the second chamfered portion 106 are provided so as not to overlap each other in both of the first direction and the second direction.

As illustrated in FIG. 1, the opening 103 has a first end portion E1, a second end portion E2, and a central portion M in the first direction. In the example illustrated in FIG. 1, the first range A includes the first end portion E1 of the opening 103, and the second range B includes the second end portion E2 of the opening 103. In other words, the first chamfered portion 105 is formed so as to include at least the first end portion E1, and the second chamfered portion 106 is formed so as to include at least the second end portion E2.

Additionally, in the example illustrated in FIG. 1, the first range A is defined between the first end portion E1 and the central portion M of the opening 103, and the second range B is defined between the second end portion E2 and the central portion M of the opening 103. In other words, the first chamfered portion 105 is formed between the first end portion E1 and the central portion M, and the second chamfered portion 106 is formed between the second end portion E2 and the central portion M. A position of an end portion on the central portion M side of the first chamfered portion 105 is substantially equal to a position of an end portion on the central portion M side of the second chamfered portion 106 in the first direction.

Additionally, in the example illustrated in FIG. 1, a dimension Wa of the first range A is equal to a dimension Wb of the second range B in the first direction. In other words, a dimension of the first chamfered portion 105 is equal to a dimension of the second chamfered portion 106 in the first direction.

Additionally, in the example illustrated in FIG. 1, a dimension of the first chamfered portion 105 is equal to a dimension of the second chamfered portion 106 in the second direction.

Note that, as illustrated in FIG. 2, the dimension Wa of the first range A (the dimension of the first chamfered portion 105) may be different from the dimension Wb of the second range B (the dimension of the second chamfered portion 106) in the first direction. Additionally, the dimension of the first chamfered portion 105 may be different from the dimension of the second chamfered portion 106 in the second direction.

According to the present invention, the first edge 101 in the first range A is provided with the first chamfered portion 105. The second edge 102 in the second range B is provided with the second chamfered portion 106. The second edge 102 in the first range A is not provided with a chamfered portion. The first edge 101 in the second range B is not provided with a chamfered portion. In driving of the tire 1, high traveling stability is obtained on both of dry road surfaces and wet road surfaces by the edge effect of the first edge 101 and the second edge 102. Additionally, when the sipe 100 is grounded, the opening 103 is closed. Thus, the first edge 101 provided with the first chamfered portion 105 and the second edge 102 without a chamfered portion support each other in the first range A, and the second edge 102 provided with the second chamfered portion 106 and the first edge 101 without a chamfered portion support each other in the second range B. The edge provided with a chamfered portion and the edge without a chamfered portion support each other, so that rigidity (namely, block rigidity) of the tread rubber 8 when being grounded is maintained. For example, block rigidity is increased further in a structure in which an edge provided with a chamfered portion and an edge without a chamfered portion support each other than in a structure in which edges each provided with a chamfered portion support each other. As a result, traveling stability is improved. Additionally, when being grounded, a space is created between the first chamfered portion 105 and a road surface, and a space is created between the second chamfered portion 106 and the road surface. The created spaces ensure drainage properties during driving on wet road surfaces. Therefore, high traveling stability is obtained on wet road surfaces. In this way, according to the present invention, the first range A in which the first edge 101 is provided with the first chamfered portion 105 and the second edge 102 is not provided with a chamfered portion and the second range B in which the second edge 102 is provided with the second chamfered portion 106 and the first edge 101 is not provided with a chamfered portion are defined. Thus, good dry performance and wet performance can be provided in a compatible manner.

Additionally, according to the present invention, the first range A includes the first end portion E1 of the opening 103, and the second range B includes the second end portion E2 of the opening 103. In other words, the first chamfered portion 105 is formed to the end of the first edge 101, and the second chamfered portion 106 is formed to the end of the second edge 102. Thus, at the time of driving on a wet road surface, water collected in the space between the first chamfered portion 105 and the road surface is smoothly discharged from the first end portion E1 side, and water collected in the space between the second chamfered portion 106 and the road surface is smoothly discharged from the second end portion E2 side. Therefore, high traveling stability is obtained on wet road surfaces, and wet performance is improved.

Additionally, in the example illustrated in FIG. 1, the first range A is defined between the first end portion E1 and the central portion M of the opening 103, and the second range B is defined between the second end portion E2 and the central portion M of the opening 103. In this way, rigidity of the tread rubber 8 is equalized in the first direction, and excellent traveling stability can be obtained. Additionally, the size of the space between the first chamfered portion 105 and the road surface is substantially equal to the size of the space between the second chamfered portion 106 and the road surface. Thus, discharge performance of water collected in the space between the first chamfered portion 105 and the road surface and discharge performance of water collected in the space between the second chamfered portion 106 and the road surface are made uniform. Therefore, high traveling stability is obtained on wet road surfaces, and wet performance is improved.

Additionally, as in the example illustrated in FIG. 2, the dimension Wa of the first range A (the dimension of the first chamfered portion 105) is different from the dimension Wb of the second range B (the dimension of the second chamfered portion 106) in the first direction, so that traveling stability during turning of the tire 1 can be improved. For example, when the tire 1 is mounted on a vehicle, the tire 1 is mounted such that the first chamfered portion 105 having the dimension Wa shorter than the dimension Wb of the second chamfered portion 106 is disposed outward from the vehicle. Thus, traveling stability during turning can be maintained.

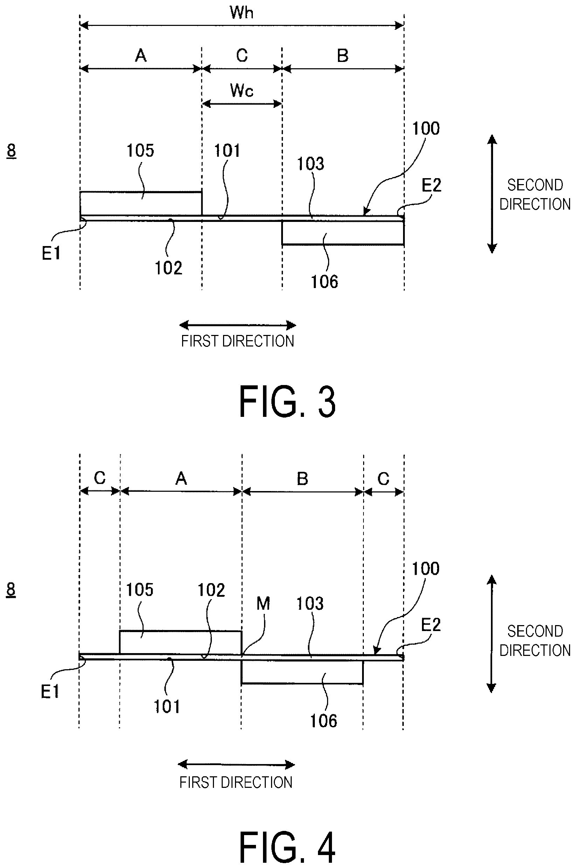

Next, an example illustrated in FIG. 3 will be described. In FIG. 3, the first edge 101 and the second edge 102 are further divided into the first range A, the second range B, and a third range C different from the first range A and the second range B.

The third range C has a certain width in the first direction and is a band region extending in the second direction. A part of the first edge 101 is disposed in the first range A, another part of the first edge 101 is disposed in the second range B, and another part of the first edge 101 is disposed in the third range C. A part of the second edge 102 is disposed in the first range A, another part of the second edge 102 is disposed in the second range B, and another part of the second edge 102 is disposed in the third range C. The part of the first edge 101 faces the part of the second edge 102 in the first range A, the other part of the first edge 101 faces the other part of the second edge 102 in the second range B, and the other part of the first edge 101 faces the other part of the second edge 102 in the third range C.

The first edge 101 in the third range C is not provided with a chamfered portion, and the second edge 102 in the third range C is also not provided with a chamfered portion.

In the present specification, the third range C is defined as a range in which a chamfered portion is not provided in the entire region of the first edge 101 disposed in the third range C and a chamfered portion is also not provided in the entire region of the second edge 102 disposed in the third range C.

In the example illustrated in FIG. 3, the first range A includes the first end portion E1 of the opening 103, the second range B includes the second end portion E2 of the opening 103, and the third range C is defined between the first range A and the second range B in the first direction.

A dimension Wc of the third range C in the first direction is defined to be less than or equal to 30% of a dimension Wh of the opening 103 in the first direction, preferably less than or equal to 20%.

The dimension Wh is preferably greater than or equal to 15 mm and less than or equal to 35 mm. The dimension Wc is preferably greater than or equal to 1 mm and less than or equal to 7 mm.

According to the present invention, high traveling stability is obtained on both of dry road surfaces and wet road surfaces by the edge effect of the first edge 101 and the second edge 102 in the third range C without a chamfered portion. Additionally, when the sipe 100 is grounded and the opening 103 is closed, the first edge 101 and the second edge 102 that are not provided with a chamfered portion support each other in the third range C. Thus, rigidity of the tread rubber 8 when being grounded is maintained.

On the other hand, with the dimension Wc of the third range C being too great, when being grounded, a space between the first chamfered portion 105 and a road surface and a space between the second chamfered portion 106 and the road surface are not sufficiently secured, and drainage properties during driving on wet road surfaces may decrease. Thus, the dimension Wc of the third range C is less than or equal to 30% of the dimension Wh of the opening 103, preferably less than or equal to 20%.

Additionally, the first range A includes the first end portion E1 of the opening 103, the second range B includes the second end portion E2 of the opening 103, and the third range C is defined between the first range A and the second range B. Thus, at the time of driving on a wet road surface, while block rigidity is maintained by the third range C defined between the first range A and the second range B, water collected in the space between the first chamfered portion 105 and the road surface is smoothly discharged from the first end portion E1 of the opening 103, and water collected in the space between the second chamfered portion 106 and the road surface is smoothly discharged from the second end portion E2 of the opening 103.

Note that, as illustrated in FIG. 4, the first range A may not include the first end portion E1 of the opening 103 in the first direction, and the second range B may not include the second end portion E2 of the opening 103 in the first direction. In the example illustrated in FIG. 4, the third range C without a chamfered portion is defined to include the first end portion E1 and the second end portion E2.

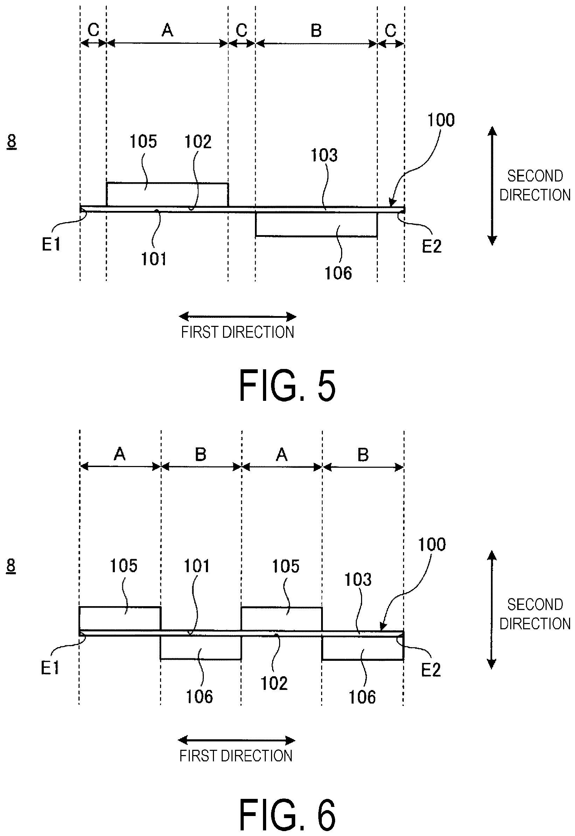

Additionally, as illustrated in FIG. 5, the third range C may be defined to include the first end portion E1 and the second end portion E2 and defined between the first range A and the second range B in the first direction.

Next, an example illustrated in FIG. 6 will be described. In FIG. 6, a plurality of first ranges A and second ranges B are defined at intervals in the first direction. The first range A and the second range B are alternately disposed in the first direction.

According to the present invention, the plurality of first ranges A and second ranges B are defined at intervals in the first direction, so that rigidity of the tread rubber 8 can be equalized in both of the first direction and the second direction, and excellent traveling stability can be obtained. Additionally, a plurality of spaces between the first chamfered portion 105 and a road surface and between the second chamfered portion 106 and the road surface are provided, so that high traveling stability is obtained on wet road surfaces, and wet performance is improved.

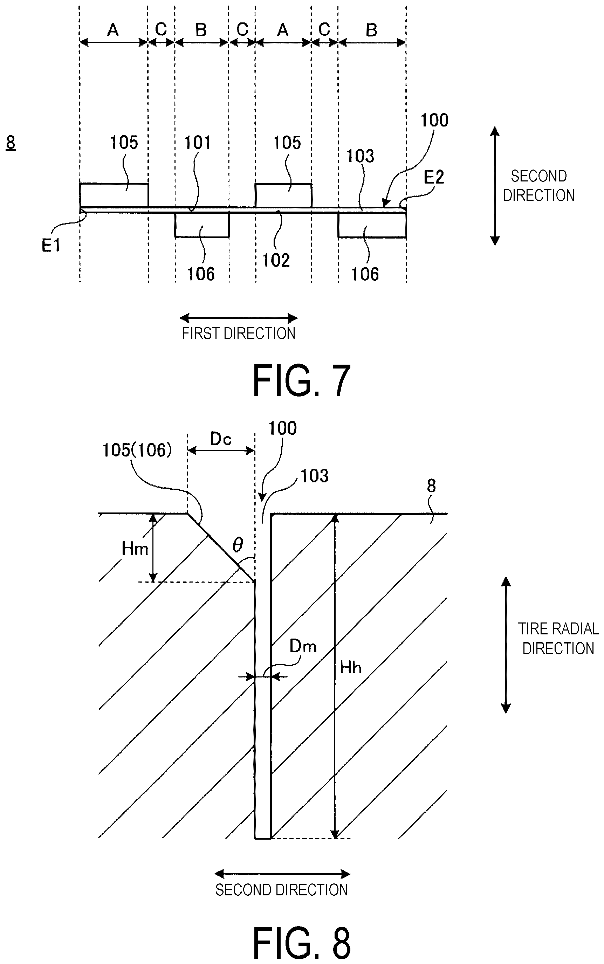

Note that, as illustrated in FIG. 7, when the plurality of first ranges A and second ranges B are defined at intervals in the first direction, the third range C may be disposed between the first range A and the second range B.

In the examples illustrated in FIGS. 1 to 7, the first direction is a tire lateral direction, and the second direction is a tire circumferential direction. Note that, the first direction may be a tire circumferential direction, and the second direction may be a tire lateral direction.

FIG. 8 is a cross-sectional view schematically illustrating an outline of the sipe 100 according to the present invention and corresponds to a view taken along line I-I in the direction of the arrows in FIG. 1. Note that, the structure of the sipe 100 illustrated in FIGS. 2 to 7 is also the same as the structure illustrated in the cross-sectional view of FIG. 8. Additionally, FIG. 8 is the cross-sectional view of the sipe 100 including the first chamfered portion 105, and the structure of the sipe 100 including the second chamfered portion 106 is also the same as the structure illustrated in the cross-sectional view of FIG. 8.

As illustrated in FIG. 8, the first chamfered portion 105 has a flat inclined surface. In other words, the first edge 101 is plane chamfered (corner chamfered), and thus the first chamfered portion 105 is formed. On the other hand, the second edge 102 is not chamfered, an inner surface of the sipe 100 is orthogonal to the surface of the tread rubber 8, and an angle that the inner surface of the sipe 100 forms with the surface of the tread rubber 8 is substantially 270°.

A dimension Hm of the first chamfered portion 105 in a tire radial direction is greater than or equal to 1 mm and less than or equal to 4 mm, and a dimension Dc of the first chamfered portion 105 in the second direction is greater than or equal to 1 mm and less than or equal to 5 mm. A groove width Dm being a dimension in the second direction of a narrow portion including a groove bottom of the sipe 100 is greater than or equal to 0.4 mm and less than or equal to 1.5 mm. Additionally, a groove depth Hh being a dimension in the tire radial direction from the groove bottom of the sipe 100 to the surface of the tread rubber 8 is greater than or equal to 4 mm and less than or equal to 8 mm. A ratio of the dimension Hm to the groove depth Hh is preferably 25% ≤ Hm/Hh ≤ 50%. A ratio of the dimension Dc to the groove width Dm is preferably 300% ≤ Dc/Dm ≤ 1500%. An inclination angle θ of the first chamfered portion 105 with respect to the tire radial direction is preferably 14° ≤ θ ≤ 78°, and is preferably 45°.

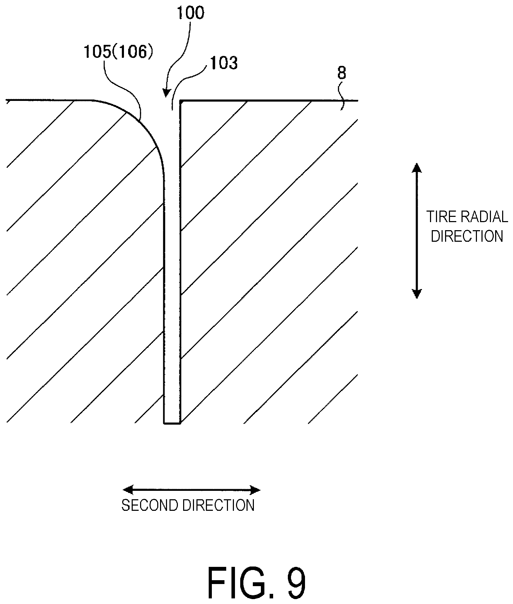

Note that, as illustrated in FIG. 9, the first chamfered portion 105 may have a curved surface. In other words, the first edge 101 is rounded chamfered (R chamfered), and thus the first chamfered portion 105 may be formed. Note that, in the example illustrated in FIG. 9, the first chamfered portion 105 is a rounded chamfer formed so as to project (bulge) toward the opening 103, but may be formed so as to be recessed with respect to the opening 103.

The outline of the tire 1 according to the present invention is described above. The present invention provides the tire 1 that can provide good dry performance and wet performance in a compatible manner. Additionally, noise performance and uneven wear resistance performance can also be improved by appropriately disposing the chamfered portion of the sipe 100. Hereinafter, embodiments being specific examples according to the present invention will be described.

### Embodiments

Embodiments according to the present invention will be described with reference to the drawings. However, the present invention is not limited to those embodiments. The constituents of the embodiments described below can be combined with one another as appropriate. In addition, some of the constituents may not be used in some embodiments.

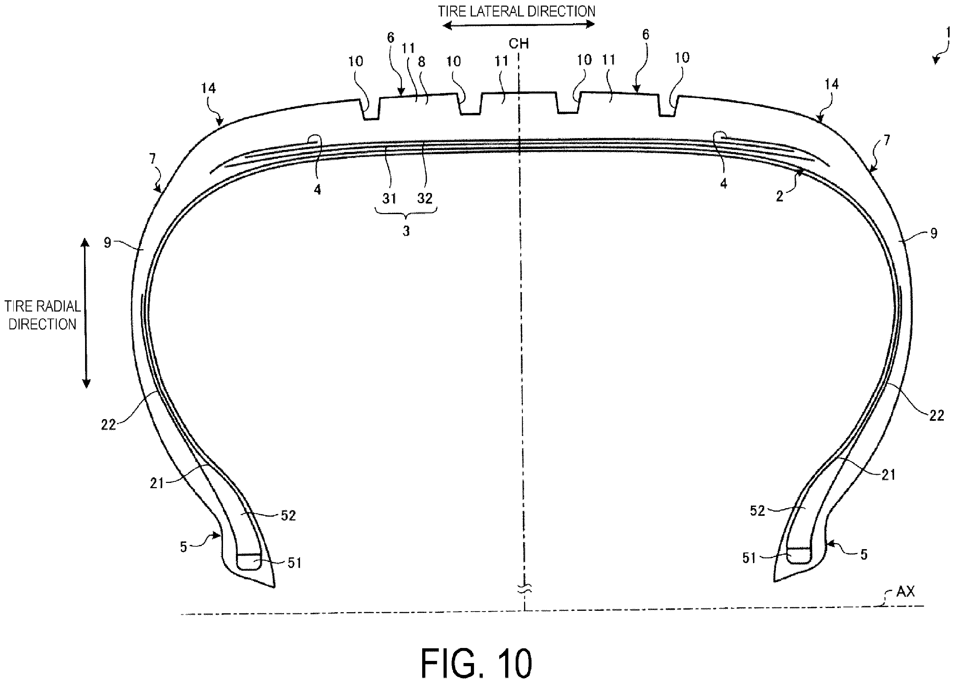

FIG. 10 is a cross-sectional view illustrating a part of the tire 1 according to the present embodiment. The tire 1 is rotatable about a rotation axis AX while being mounted on a rim. FIG. 10 illustrates a meridian cross-section passing through the rotation axis AX of the tire 1. The rotation axis AX of the tire 1 is orthogonal to a tire equatorial plane CH. The tire equatorial plane CH indicates the center of the tire 1 in the tire lateral direction.

In the present specification, a direction parallel with the rotation axis AX is referred to as the tire lateral direction. A radiation direction with respect to the rotation axis AX is referred to as the tire radial direction. A rotation direction of the tire 1 about the rotation axis AX is referred to as the tire circumferential direction. Additionally, the tire equatorial plane CH is referred to as a tire center CH as appropriate.

In the present embodiment, the outer side in the tire lateral direction represents a position at a distance from or a direction away from the tire center CH in the tire lateral direction. The inner side in the tire lateral direction represents a position in the vicinity of or a direction closer to the tire center CH in the tire lateral direction. The outer side in the tire radial direction represents a position at a distance from or a direction away from the rotation axis AX in the tire radial direction. The inner side in the tire radial direction represents a position in the vicinity of or a direction closer to the rotation axis AX in the tire radial direction. A first side in the tire circumferential direction represents a direction designated in the tire circumferential direction. A second side in the tire circumferential direction represents a direction opposite to the direction designated in the tire circumferential direction.

The tire 1 includes a carcass 2, a belt layer 3, a belt cover 4, bead portions 5, a tread portion 6, and sidewall portions 7. The tread portion 6 includes the tread rubber 8. The sidewall portions 7 each include a side rubber 9.

The carcass 2 is a reinforcing member that forms the framework of the tire 1. The carcass 2 includes carcass cords and functions as a pressure vessel when the tire 1 is filled with air. The carcass 2 includes carcass cords made of organic fibers and rubber that covers the carcass cords. Note that, the carcass 2 may include carcass cords made of polyester, carcass cords made of nylon, carcass cords made of aramid, and carcass cords made of rayon.

The bead portions 5 are reinforcing members that support the carcass 2. The bead portions 5 are disposed on both sides of the carcass 2 in the tire lateral direction and support both end portions of the carcass 2. The carcass 2 is folded back at bead cores 51 of the bead portions 5. The bead portions 5 fix the tire 1 to a rim. The bead portions 5 each include the bead core 51 and a bead filler 52.

The carcass 2 includes carcass body portions 21 and carcass folded back portions 22 formed by being folded back at the bead cores 51. The carcass folded back portion 22 is a portion disposed outward in the tire lateral direction with respect to the carcass body portion 21 by folding the carcass 2 back at the bead core 51. The bead core 51 is a member in which bead wires are wound into a ring shape. The bead wires are steel wires. The bead filler 52 is a rubber material that is disposed in a space between the carcass body portion 21 formed by the carcass 2 folded back at the bead core 51 and the carcass folded back portion 22.

The belt layer 3 is a reinforcing member that holds the form of the tire 1. The belt layer 3 includes belt cords and is disposed between the carcass 2 and the tread rubber 8. The belt layer 3 includes belt cords made of metal fibers and rubber that covers the belt cords. Note that the belt layer 3 may include belt cords made of organic fibers. The belt layer 3 includes a first belt ply 31 and a second belt ply 32. The first belt ply 31 and the second belt ply 32 are layered such that the belt cords of the first belt ply 31 and the belt cords of the second belt ply 32 intersect.

The belt cover 4 is a reinforcing member that protects and reinforces the belt layer 3. The belt cover 4 includes cover cords and is disposed outward from the belt layer 3 with respect to the rotation axis AX of the tire 1. The belt cover 4 includes cover cords made of metal fibers and rubber that covers the cover cords. Note that the belt cover 4 may include cover cords made of organic fibers.

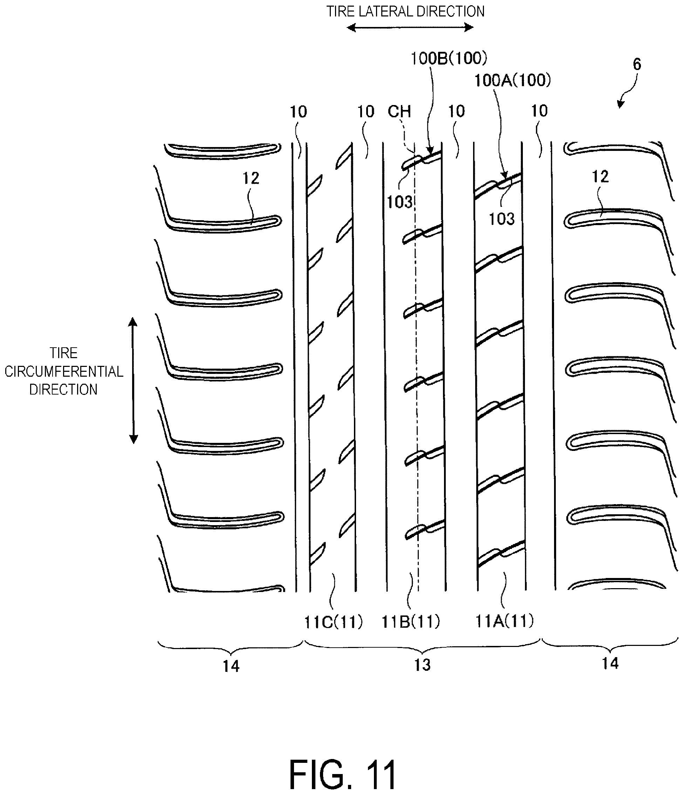

FIG. 11 is a plan view illustrating a part of the tread portion 6. As illustrated in FIGS. 10 and 11, the tread portion 6 includes the tread rubber 8 and has grooves provided in a predetermined pattern design. The grooves are provided in the tread rubber 8. The tread rubber 8 protects the carcass 2. The tread portion 6 includes a land portion disposed between the grooves. The land portion has the surface (tread surface, contact patch, road contact surface) of the tread rubber 8 in contact with a road surface. The grooves include a plurality of main grooves 10 disposed in the tire circumferential direction, lug grooves 12 including at least a part of the lug grooves 12 disposed in the tire lateral direction, and the sipe 100. Additionally, the tread portion 6 includes a center portion 13 including a tire center CH and shoulder portions 14 provided on both sides of the center portion 13 in the tire lateral direction.

In the present embodiment, four main grooves 10 are provided in the tire lateral direction. Three ribs 11 being land portions are provided between those main grooves 10. The ribs 11 include a center rib 11B disposed at the center in the tire lateral direction, a second rib 11A disposed on one of sides of the center rib 11B in the tire lateral direction, and a second rib 11C disposed on the other side of the center rib 11B in the tire lateral direction. The tire center CH passes through the center rib 11B. The three ribs 11 (11A, 11B, and 11C) are provided on the center portion 13.

The center rib 11B and the second rib 11A are each provided with the sipe 100. The opening 103 of the sipe 100 extends in the tire lateral direction. In the example illustrated in FIG. 11, the opening 103 of the sipe 100 is slightly inclined to the tire circumferential direction.

In the present embodiment, a sipe 100A provided in the second rib 11A has an opening structure in which the sipe 100A penetrates the second rib 11A in the tire lateral direction. One of end portions and the other end portion of the sipe 100A in the tire lateral direction are connected to the main grooves 10 located on both sides of the second rib 11A.

In the present embodiment, a sipe 100B provided in the center rib 11B has a semi-closed structure in which one of end portions of the sipe 100B is connected to the main groove 10 on one of sides of the center rib 11B, and the other end portion is terminated in the center rib B.

### First Embodiment

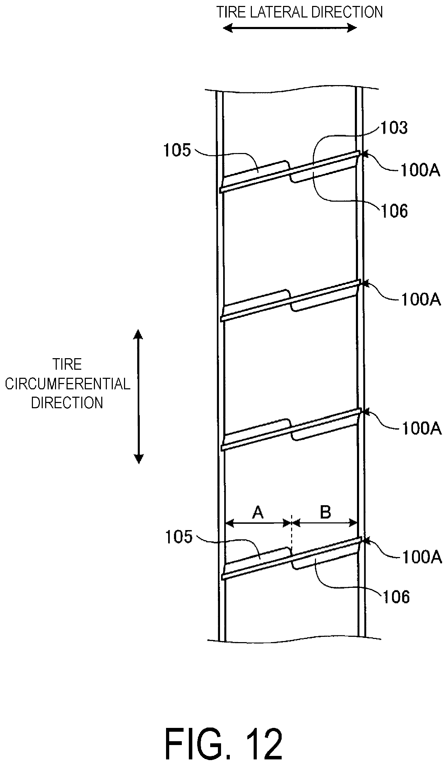

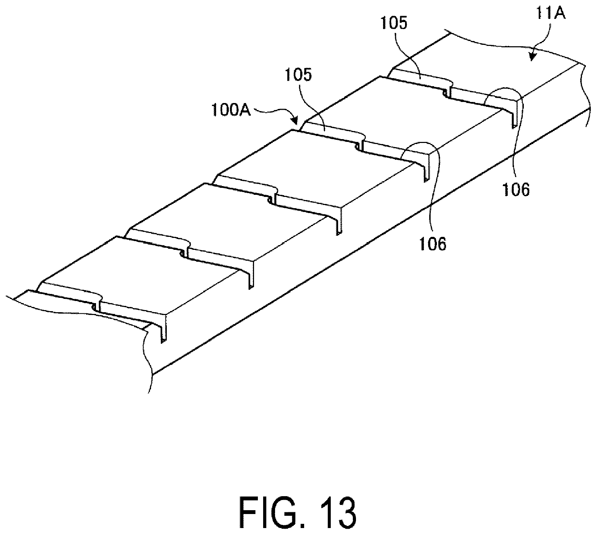

FIG. 12 is a plan view illustrating one example of the sipe 100A according to the present embodiment. FIG. 13 is a perspective view illustrating one example of the sipe 100A according to the present embodiment. FIG. 12 is a plan view schematically illustrating a part of the second rib 11A provided with the sipe 100A. FIG. 13 is a perspective view schematically illustrating a part of the second rib 11A provided with the sipe 100A.

As illustrated in FIGS. 12 and 13, sipes 100A are disposed at regular intervals in the tire circumferential direction. The opening 103 of the sipe 100A extends in the tire lateral direction and is slightly inclined to the tire circumferential direction. In the example illustrated in FIGS. 12 and 13, the first range A and the second range B are defined, and the third range C is not defined. In a surface parallel with the surface of the tread rubber 8, an external form and a dimension of the first chamfered portion 105 are substantially equal to an external form and a dimension of the second chamfered portion 106. In the present embodiment, the external form of the first chamfered portion 105 and the external form of the second chamfered portion 106 are substantially quadrangular and are formed to have a uniform width in the tire circumferential direction. Additionally, a corner of the first chamfered portion 105 and a corner of the second chamfered portion 106 at the central portion M of the opening 103 are formed with a curved line and are rounded.

Note that, in the example illustrated in FIGS. 12 and 13, the third range C without a chamfered portion may be provided between the first chamfered portion 105 and the second chamfered portion 106, as described with reference to FIG. 3.

### Second Embodiment

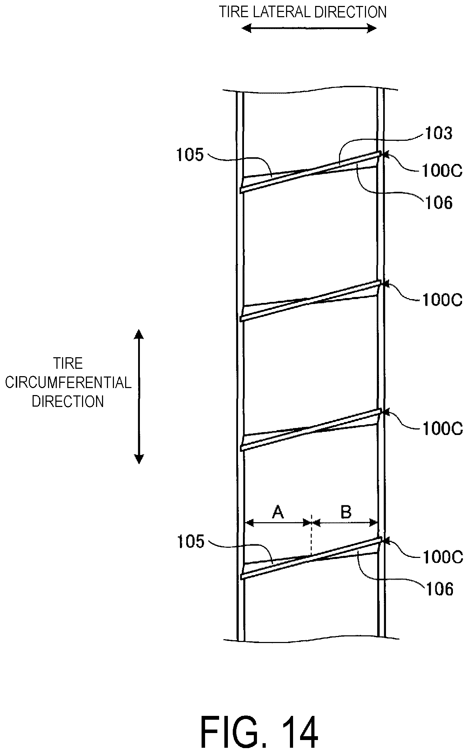

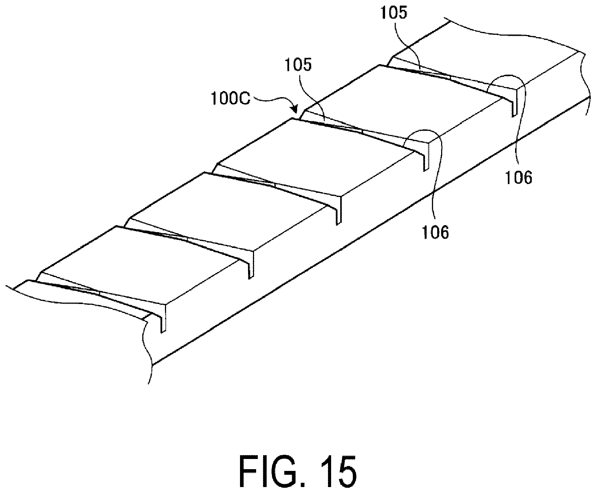

FIG. 14 is a plan view illustrating one example of a sipe 100C according to the present embodiment. FIG. 15 is a perspective view illustrating one example of the sipe 100C according to the present embodiment.

As illustrated in FIGS. 14 and 15, sipes 100C are disposed at regular intervals in the tire circumferential direction. The opening 103 of the sipe 100C extends in the tire lateral direction and is slightly inclined to the tire circumferential direction. In the example illustrated in FIGS. 14 and 15, the first range A and the second range B are defined, and the third range C is not defined. In a surface parallel with the surface of the tread rubber 8, an external form and a dimension of the first chamfered portion 105 are substantially equal to an external form and a dimension of the second chamfered portion 106. In the present embodiment, the external form of the first chamfered portion 105 and the external form of the second chamfered portion 106 are substantially triangular and are provided such that a corner having the most acute angle faces the central portion M of the opening 103.

Note that, in the example illustrated in FIGS. 14 and 15, the third range C without a chamfered portion may be provided between the first chamfered portion 105 and the second chamfered portion 106, as described with reference to FIG. 3.

### Third Embodiment

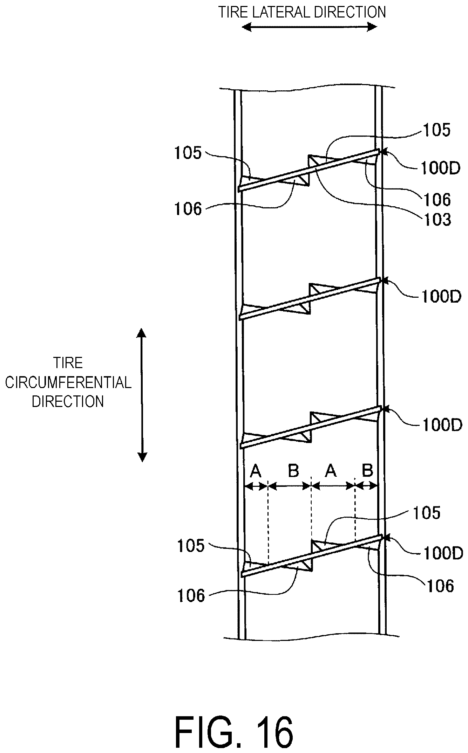

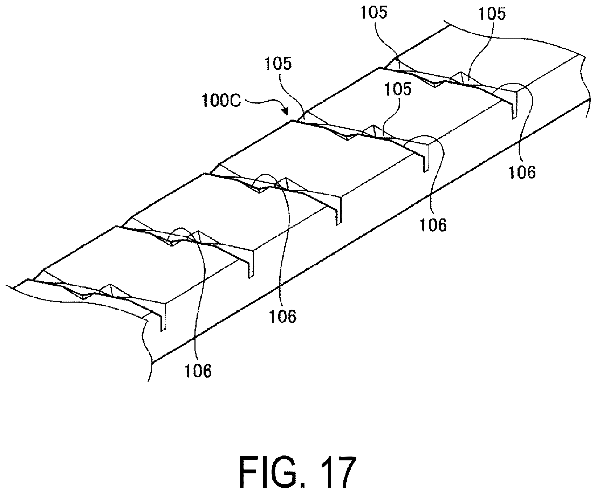

FIG. 16 is a plan view illustrating one example of a sipe 100D according to the present embodiment. FIG. 17 is a perspective view illustrating one example of the sipe 100D according to the present embodiment.

As illustrated in FIGS. 16 and 17, sipes 100D are disposed at regular intervals in the tire circumferential direction. The opening 103 of the sipe 100D extends in the tire lateral direction and is slightly inclined to the tire circumferential direction. In the example illustrated in FIGS. 16 and 17, the first range A and the second range B are defined, and the third range C is not defined. A plurality of first ranges A and second ranges B are defined at intervals in a longitudinal direction of the opening 103 (substantially the tire lateral direction), and the first range A and the second range B are alternately disposed. In a surface parallel with the surface of the tread rubber 8, an external form and a dimension of the first chamfered portion 105 are substantially equal to an external form and a dimension of the second chamfered portion 106. In the present embodiment, the external form of the first chamfered portion 105 and the external form of the second chamfered portion 106 are substantially triangular and are provided such that one side of the triangle is adjacent to the opening 103 and one corner protrudes away from the opening 103.

Note that, in the example illustrated in FIGS. 16 and 17, the third range C without a chamfered portion may be provided between the first chamfered portion 105 and the second chamfered portion 106, as described with reference to FIG. 7.

### Examples

Next, a result of an evaluation test performed on the tire 1 according to the present invention will be described. In the evaluation test, tires having a tire size of 245/40R18 were used.

As tires being evaluation subjects, tires according to Conventional Example 1, Conventional Example 2, and Conventional Example 3 and tires 1 according to Example 1, Example 2, Example 3, and Example 4 according to the present invention were prepared. Note that, structures of main grooves and lug grooves of the tires according to Conventional Examples 1, 2, and 3 and the tires according to Examples 1, 2, 3, and 4 are the same as the structures described with reference to FIGS. 10 and 11.

The tire according to Conventional Example 1 is a tire without a sipe. In other words, the tire according to Conventional Example 1 is a tire excluding the sipe 100 from the tire 1 described with reference to FIGS. 10 and 11.

The tires according to Conventional Examples 2 and 3 are tires each provided with a sipe. The tires according to Conventional Examples 2 and 3 are tires each provided with a sipe in the position of the sipe 100 of the tire 1 described with reference to FIGS. 10 and 11.

The tire according to Conventional Example 2 is a tire provided with the sipe without a chamfered portion.

The tire according to Conventional Example 3 is a tire in which a chamfered portion is provided in the entire region of a first edge and a second edge of an opening of the sipe.

The tire 1 according to Example 1 is the tire 1 having the sipe 100A and the sipe 100B described with reference to FIGS. 10, 11, 12, and 13.

The tires according to Examples 2, 3, and 4 are tires each provided with a sipe in the position of the sipe 100 of the tire 1 described with reference to FIGS. 10 and 11.

The tire 1 according to Example 2 is the tire 1 having the sipe 100C described with reference to FIGS. 14 and 15.

The tire 1 according to Example 3 is the tire 1 having a sipe defined in the third range C described with reference to FIG. 3 between the first range A and the second range B of the sipe 100C described with reference to FIGS. 14 and 15.

The tire 1 according to Example 4 is the tire 1 having the sipe 100D described with reference to FIGS. 16 and 17.

Evaluation items of the evaluation test were (1) dry performance, (2) wet braking performance, (3) wet turning performance, (4) noise performance, and (5) uneven wear resistance performance.

In the evaluations of dry performance, the test vehicle was driven at a speed of from 60 km/h to 100 km/h on a test course of a dry road surface having a flat circuit. Then, the test driver performed a sensory evaluation regarding steering while lane changing and cornering and stability while traveling forward. Results of the evaluations are expressed as index values and evaluated with Conventional Example 1 being assigned as the reference (100), and higher values are preferable.

In the evaluations of wet braking performance, the test vehicle was driven at a speed of 40 km/h on an asphalt road surface covered with 1 mm of water. Then, the test driver performed a sensory evaluation regarding stability while braking. Results of the evaluations are expressed as index values and evaluated with Conventional Example 1 being assigned as the reference (100), and higher values are preferable.

In the evaluations of wet turning performance, the test vehicle was driven at a speed of 40 km/h on an asphalt road surface covered with 1 mm of water. Then, the test driver performed a sensory evaluation regarding stability of steering characteristics while lane changing and cornering. Results of the evaluations are expressed as index values and evaluated with Conventional Example 1 being assigned as the reference (100), and higher values are preferable.

In the evaluations of noise performance, the test vehicle was driven at a speed of 80 km/h on an international organization for standardization (ISO) test road, and a sound pressure level of the pass-by noise (vehicle external noise) was measured and evaluated. Results of the evaluations are expressed as index values and evaluated with Conventional Example 1 being assigned as the reference (100). It is preferable that a sound pressure level is lower with higher values.

In the evaluations of uneven wear resistance performance, the test vehicle was driven for 50000 km on a paved road, and then the amount of wear of a second rib and uneven wear occurring in the second rib were observed and evaluated. Results of the evaluations are expressed as index values and evaluated with Conventional Example 1 being assigned as the reference (100), and higher values are preferable.

The results of the evaluation test on the five evaluation items described above are shown in Table 1.

**[Table 1]**

| | Conventional Example 1 | Conventional Example 2 | Conventional Example 3 | Example 1 | Example 2 | Example 3 | Example 4 |
|---|---|---|---|---|---|---|---|
| Dry performance | 100 | 105 | 100 | 105 | 110 | 110 | 115 |
| Wet braking performance | 100 | 95 | 100 | 110 | 105 | 105 | 105 |
| Wet turning performance | 100 | 95 | 100 | 105 | 105 | 105 | 105 |
| Noise performance | 100 | 105 | 105 | 110 | 110 | 110 | 110 |
| Uneven wear resistance performance | 100 | 105 | 105 | 110 | 110 | 110 | 110 |

As shown in Table 1, it is clear that the evaluations of all the items of (1) dry performance, (2) wet braking performance, (3) wet turning performance, (4) noise performance, and (5) uneven wear resistance performance are higher in Examples than in Conventional Examples. As described above, it is clear that the tire 1 according to the present invention has high quality.

### Reference Signs List

1 Tire (pneumatic tire)
2 Carcass
3 Belt layer
4 Belt cover
5 Bead portion
6 Tread portion
7 Sidewall portion
8 Tread rubber
9 Side rubber
10 Main groove
11 Rib
12 Lug groove
13 Center portion
14 Shoulder portion
21 Carcass body portion
22 Carcass folded back portion
31 First belt ply
32 Second belt ply
51 Bead core
52 Bead filler
100 Sipe
100A, 100B, 100C, 100D Sipe
101 First edge
102 Second edge
103 Open
105 First chamfered portion
106 Second chamfered portion
A First range
B Second range
C Third range
E1 First end portion
E2 Second end portion
M Central portion

## Claims

1. A pneumatic tire comprising:
a sipe that is formed in a tread rubber and includes an opening extending in a first direction in a surface of the tread rubber, wherein
the opening is provided between a first edge of the tread rubber extending in the first direction and a second edge of the tread rubber adjacent to the first edge in a second direction orthogonal to the first direction,
the first edge and the second edge are divided into a first range defined in the first direction and a second range different from the first range,
in the first range, the first edge is provided with a first chamfered portion,
in the second range, the second edge is provided with a second chamfered portion,
in the first range, the second edge is not provided with a chamfered portion, and
in the second range, the first edge is not provided with a chamfered portion.

2. The pneumatic tire according to claim 1, wherein
the first range includes a first end portion of the opening in the first direction, and
the second range includes a second end portion of the opening in the first direction.

3. The pneumatic tire according to claim 2, wherein
the first range is defined between the first end portion and a central portion of the opening in the first direction, and
the second range is defined between the second end portion and the central portion of the opening in the first direction.

4. The pneumatic tire according to claim 1, wherein
the first edge and the second edge are further divided into a third range different from the first range and the second range, and
both of the first edge and the second edge are not provided with a chamfered portion in the third range.

5. The pneumatic tire according to claim 4, wherein
the first range includes a first end portion of the opening in the first direction,
the second range includes a second end portion of the opening in the first direction, and
the third range is defined between the first range and the second range.

6. The pneumatic tire according to claim 5, wherein
a dimension of the third range in the first direction is less than or equal to 30% of a dimension of the opening in the first direction.

7. The pneumatic tire according to claim 1 or 2, wherein
a plurality of the first ranges and the second ranges are defined at intervals in the first direction.
